# EUROPÄISCHE PATENTSCHRIFT

(11) **EP 3 495 706 B1**
(45) Veröffentlichungstag und Bekanntmachung des Hinweises auf die Patenterteilung: **22.07.2020**
(21) Anmeldenummer: 18208326.1
(22) Anmeldetag: 26.11.2018
(51) Int. Cl.: F16L 53/38, F16L 25/01, F16L 41/00

(54) **LEITUNGSVERBINDER MIT INTEGRIERTEM SENSOR ZUR MESSUNG VON HARNSTOFF-LÖSUNGEN**
PIPE CONNECTOR WITH INTEGRATED SENSOR FOR MEASURING UREA SOLUTIONS
RACCORD DE CONDUITE À CAPTEUR INTÉGRÉ PERMETTANT DE MESURER DES SOLUTIONS D'URÉE

(30) Priorität: 27.11.2017 DE 102017127936
(43) Veröffentlichungstag der Anmeldung: 12.06.2019
(73) Patentinhaber: Voss Automotive GmbH, 51688 Wipperfürth (DE)
(72) Erfinder: Rosenfeldt, Sascha, 51688 Wipperfürth (DE); Zwillus, Christian, 51702 Bergneustadt (DE); Wilms, Waldemar, 51709 Marienheide (DE); Inniger, Steve, Hoagland, IN 46745 (US)
(74) Vertreter: Patent- und Rechtsanwälte Dr. Solf & Zapf

(56) Entgegenhaltungen:
- EP-A1- 2 527 704
- WO-A1-2008/131993
- WO-A1-2012/079833
- WO-A2-2007/019577
- US-A1- 2013 220 467

## Beschreibung

Die vorliegende Erfindung betrifft einen Leitungsverbinder, gemäß dem Oberbegriff des Anspruchs 1.

Für die Abgasnachbehandlung von Dieselfahrzeugen ist nach aktuellen Emissionsanforderungen meist ein so genanntes SCR-System erforderlich. Hierbei werden durch eine Einspritzung einer Harnstofflösung im Bereich eines SCR-Katalysators giftige Stickoxide in harmlosen Stickstoff und Sauerstoff umgewandelt.

Das Medium Harnstofflösung wird aus einem separaten Tank über Leitungs- und Verbindungstechnik zu einer Dosiereinheit für die Einspritzung der Harnstofflösung in den Abgasstrang gefördert. Die Qualität und das richtige Mischungsverhältnis der Harnstofflösung ist zum Erreichen der jeweiligen gesetzlichen Anforderungen zu überwachen. Dies wird durch einen Harnstoff-Qualitätssensor erfüllt.

Die aktuelle Qualitätssensorik sitzt zumeist in einem Tank zur Aufnahme der Harnstofflösung. Dort ist sie entweder im Medium versenkt oder sitzt in der Tankwandung. Versenkte Sensoren sind an einer Tank-Headereinheit (Kopfeinheit) befestigt, die auch ein Auftauen der Harnstofflösung im Tank bewirkt. In der Tankwandung sitzende Sensoren sind durch eine Vorrichtung am Tank fixiert. Eine geeignete Dichtung verhindert das Austreten der Harnstofflösung aus dem Tank.

Es sind verschiedene Lösungen bekannt, die Qualität der Harnstofflösung elektronisch zu messen. Eine bekannte Technik ist zum Beispiel das Messen von Ultraschallwellen-Laufzeiten mittels eines Ultraschallsensors. Weiterhin werden thermische oder optische Sensorsysteme eingesetzt.

Die bekannten Messsysteme besitzen insbesondere in Nutzfahrzeugen oder bei Offroad-Fahrzeugen den Nachteil, dass es viele verschiedene Tankgeometrien für den Tank zur Aufnahme der Harnstofflösungen gibt, wobei für jeden Tank die Position des Sensors in bzw. am Tank neu bestimmt werden muss. Hieraus ergibt sich eine große Variantenvielfalt.

Im Tank zur Aufnahme der Harnstofflösung, insbesondere bei Nutz- und Offroad-Fahrzeugen, treten Verschmutzungen auf, die durch die Tanköffnung in den Tank gelangen. Diese Verschmutzungen können die Messung der Harnstofflösungsqualität negativ beeinflussen.

Weiterhin können beim Tanken eine hohe Anzahl von Luftblasen in den Tank gelangen. Kleine Blasen können sich auf der Sensoroberfläche absetzen bzw. dort anhaften. Derartige Blasen in der Harnstofflösung oder auf der Oberfläche des Sensors beeinflussen die jeweilige Messung negativ.

Da der Tank eine nicht unerhebliche Menge der Harnstofflösung enthält, können sich bei Temperaturen unter dem Gefrierpunkt durchaus größere Eisbrocken innerhalb der Tanklösung ausbilden, die die Messung ebenfalls negativ beeinflussen und auch die Sensorik durch ein Hin- und Herschwappen der Lösung mechanisch beschädigen können.

In der Tankwandung sitzende Messsensoren können bei einer Undichtigkeit zum Verlust einer großen Harnstofflösungsmenge führen. Weiterhin sind im Tank versenkte Messsensoren komplett von der Harnstofflösung umgeben. Somit müssen alle elektrischen Anschlüsse auch in das Tankgehäuse eingeführt werden. Zudem müssen sie gegen das Eindringen der Harnstofflösung geschützt sein. Ein Eindringen der Harnstofflösung kann nämlich zur Zerstörung des jeweiligen Messsensors führen. Zudem kann die Harnstofflösung aber auch in den Kabelbaum des angeschlossenen elektrischen Kabels hineinkriechen und weitere Zerstörungen im Fahrzeug anrichten.

Bei in der Tankwandung sitzenden Messsensoren muss im Servicefall zum Austausch des Messsensors der komplette Tank für die Harnstofflösung entleert werden. Bei im Tankheader sitzenden Messsensoren muss dieser komplett ausgebaut werden, was mit erheblichem Aufwand und Kosten verbunden ist.

Aus der US 2013/0220467 ist es bekannt, dass die Messung der Eigenschaften der in dem Durchflusskanal fließenden Harnstofflösung unmittelbar im Durchflusskanal selbst erfolgt, so dass somit der Messsensor Bestandteil des Leitungsverbinders selbst ist. Damit ist der Einbau des Messsensors unabhängig von der jeweiligen Tankgeometrie, ebenfalls kann die Tankgeometrie unabhängig von dem Einbau eines derartigen Messsensors gewählt werden. Durch die Integration des Messsensors in den Leitungsverbinder sind Verschmutzungen, die sich im Tank selbst befinden, messtechnisch nicht mehr relevant, denn derartige Verschmutzungen werden in der Regel durch einen Filter vom Leitungssystem selbst ferngehalten. Weiterhin wird das Problem vermieden, dass Luftblasen das Messergebnis beeinträchtigen können, da derartige Luftblasen, die durch das Tanken eingebracht werden, sich nicht im Leitungssystem befinden, denn durch den Medienfluss im Betrieb können sich Luftblasen auf der Sensoroberfläche nur schwierig dauerhaft anlagern. Auch die eventuell in einem Tank befindlichen Eisbrocken können das Leitungssystem selbst nicht beeinflussen. Sofern eine Undichtigkeit auftritt, ist ein Austritt einer großen Menge der Harnstofflösung nicht zu befürchten, da sich im Leitungssystem selbst jeweils nur eine geringe Menge von Harnstofflösung befindet. Demnach kann auch durch eine austretende Harnstofflösung kein großer Schaden verursacht werden. Auch bei einer Leckage kann es nicht zu erheblichen Zerstörungen anderer Komponenten im Fahrzeug führen, da die elektrischen Anschlüsse nicht in die Harnstofflösung selbst eingetaucht sind. Im Servicefall kann die jeweilige Leitung bzw. der Sensor zusammen mit dem Leitungsverbinder oder separat von diesem leicht getauscht werden. Zudem ist der Sensor einfach zu erreichen, und es bedarf keiner weiteren Vorkehrung, wie zum Beispiel einer Tankentleerung. Bei diesem bekannten Leitungsverbinder besteht die Gefahr, dass die Harnstofflösung in den Bereich des Messsensors eindringen kann.

Der vorliegenden Erfindung liegt die Aufgabe zugrunde, es zu vermeiden, dass die Harnstofflösung in den Messsensor eindringen kann sowie einen Leitungsverbinder zu schaffen, der einen kompakten und kostengünstig herstellbaren Aufbau aufweist.

Dies wird durch die Merkmale des Anspruchs 1 erreicht.

Erfindungsgemäß ist im Bereich des Durchflusskanals zwischen den an den beiden Enden vorhandenen Anschlussabschnitten in einer den Durchflusskanal umgebenden Wandung des Verbinderstücks ein für ein optisches Sensorsignal durchlässiger Wandungsabschnitt ausgebildet und ein den durchlässigen Wandungsabschnitt umfangsgemäß umfassendes Aufnahmegehäuse an dem Verbinderstück ausgebildet ist, das eine den durchlässigen Wandungsabschnitt gegenüberliegende Aufnahmeöffnung zur Montage der optischen Sensoreinheit innerhalb des Aufnahmegehäuses aufweist. Somit erfolgt gemäß der Erfindung die Messung an der Oberfläche des Mediums im Strömungsbereich des Leitungssystems. Der Messbereich des Sensors bzw. seine Messfläche ist somit Teil des Mediumkanals. Somit wird ein separater Mediumkanal, der zum Sensor führt und von diesem wegführen würde, vermieden. Es ist auch keine Öffnung zum Sensor selbst vorhanden, so dass die Harnstofflösung in den Sensor selbst eindringen könnte. Gemäß der Erfindung emittiert der erfindungsgemäße optische Sensor Licht vorzugsweise im IR-Bereich durch den durchlässigen Wandungsabschnitt hindurch in das Medium. Hierbei wird das Licht an der Oberfläche der Harnstofflösung reflektiert und durch die für das Sensorsignal durchlässige Fläche bzw. durch den durchlässigen Wandungsabschnitt wieder zurück an den Sensor geleitet. Der Reflexionswinkel und/oder die Intensität des reflektierten Lichts geben hierbei Rückmeldung über die Qualität der Harnstofflösung. Hierbei ist, der durchlässige Wandungsabschnitt als offener Durchbruch in der Wandung ausgebildet. Hierbei weist die Sensoreinheit an ihrer dem Durchbruch gegenüberliegenden Seite eine derartige Abdeckung aufweist, dass die Abdeckung den offenen Durchbruch verschließt und selbst aus einem für das optische Sensorsignal durchlässigen Material besteht. Durch diese erfindungsgemäße Ausgestaltung bildet die Sensoreinheit einen Teil der Wandung des Durchflusskanals. Somit wird der Durchflusskanal des Verbinderstücks durch diese Abdeckung im Bereich seines Durchbruchs begrenzt. Hierdurch ergibt sich ein wesentlicher Herstellungsvorteil des erfindungsgemäßen Leitungsverbinders, da somit der Leitungsverbinder insbesondere aus einem einheitlichen Material als integrales Kunststoffspritzgussteil ausgebildet werden kann. Erfindungsgemäß wird ein direkter Kontakt der Harnstofflösung mit dem Sensor vermieden.

Der vorteilhafterweise gemäß der Erfindung vorhandene Sensor ist Bestandteil eines geschlossenen Sensorkörpers, so dass der innerhalb des Sensorkörpers vorhandene Sensor selbst gegen die vorhandene Harnstofflösung geschützt ist. Erfindungsgemäß ist es vorteilhaft, wenn der Sensorkörper, der den Messsensor enthält, mittels einer O-Ringdichtung gegenüber dem Aufnahmegehäuse des Leitungsverbinders abgedichtet ist. Diese Ausbildung der Dichtung zeichnet sich durch eine einfache Bauform aus und gewährleistet eine Abdichtung nach außen, so dass die vorhandene Harnstofflösung nicht nach außen austreten kann.

Eine zweckmäßige Ausbildung einer Befestigung des Sensorkörpers an dem Aufnahmegehäuse des Leitungsverbinders kann beispielsweise durch Stoffschluss, zum Beispiel durch Laserschweißung erfolgen, wobei diese Laserschweißung nicht umlaufend ausgebildet sein kann und auch nicht zur Abdichtung des Sensorkörpers gegenüber dem Aufnahmegehäuse dient. Sie dient nur zur Halterung des Sensorkörpers im Aufnahmegehäuse. Alternativ zum Verschweißen des Sensorkörpers mit dem Aufnahmegehäuse kann auch eine mechanische Verbindung zwischen beiden Teilen vorteilhafterweise vorgesehen sein, und zwar beispielsweise mittels einer bajonettverschlussartigen Verbindung. Auch wäre eine clipartige Verrastung der beiden Teile vorteilhaft, wobei eine lösbare und eine nicht lösbare Clipverbindung in Form einer Verrastung vorteilhaft sein kann.

Es ist vorteilhaft, wenn der Durchflusskanal im Sensorgehäuse einen gegenüber den Durchflusskanälen in den Anschlussabschnitten vergrößerten Querschnitt aufweist, womit eine Geschwindigkeitsreduzierung des in den Kanälen fließenden Mediums verbunden ist.

Für den Fall, dass das Leitungssystem, in dem ein erfindungsgemäßer Leitungsverbinder integriert ist, mehrfachem Leerpumpen und Wiederbefüllen unterworfen ist, kann es möglich sein, dass sich im Bereich der Messstelle Luftblasen halten und hierdurch gegebenenfalls das Messergebnis beeinflusst wird. Um dieses Problem zu lösen, kann es erfindungsgemäß zweckmäßig sein, wenn im Messbereich des Sensors eine Verengung des Durchflusskanals vorgesehen ist und damit eine Geschwindigkeitserhöhung der Fließgeschwindigkeit des Mediums verbunden ist, die bewirkt, dass die dort eventuell sich haltenden Luftblasen entfernt werden. Hierbei ist es vorteilhaft, wenn die Querschnittsverengung, ausgehend von den jeweiligen Durchflusskanälen der Anschlussabschnitte, kontinuierlich erfolgt, so dass kein sprunghafter Übergang der unterschiedlichen Querschnitte gegeben ist.

Weiterhin kann es erfindungsgemäß von Vorteil sein, wenn die die Messstelle umgebenden Materialabschnitte des erfindungsgemäßen Leitungsverbinders, das sind zum Beispiel vorhandene Schutzkappen oder die jeweiligen Gegenkonturen, aus einem Material bestehen, das für UV- oder IR-Licht lichtundurchlässig ist, so dass eine Eliminierung dieser Lichteinflüsse gegeben ist, und nur eine Lichtdurchlässigkeit für die Messwellenlänge des optischen Sensors gegeben ist.

Vorteilhafte Ausführungen der Erfindung sind in den Unteransprüchen enthalten. Hierbei können die einzelnen Merkmale der Unteransprüche einzeln oder in Kombination mit den Merkmalen des Hauptanspruchs kombiniert werden.

Erfindungsgemäß wird somit eine hochpräzise Qualitätskontrolle der Harnstofflösung unmittelbar im Durchflusskanal ermöglicht, wobei zwischen - 8 °C und + 80 °C kleinste Abweichungen der Harnstofflösungskonzentration mit geringen Abweichungen im Bereich von +/- 2 % bei Konzentrationen zwischen 20 % und 40 % und Abweichungen von +/- 3 % bei Konzentrationen zwischen 10 % und 20 % bzw. 40 % bis 60 % erfasst werden können.

Erfindungsgemäß kann der erfindungsgemäße Leitungsverbinder in eine beheizte oder nicht beheizte Medienleitung integriert sein, so dass eine intelligente konfektionierte Leitung zur Weiterleitung von Harnstofflösungen geschaffen wird, wobei aufgrund der Beheizbarkeit des Leitungsverbinders und der angeschlossenen Medienleitung eine genaue und definierte Betriebsperformance verwirklicht wird.

Vorteilhafte Ausführungen der Erfindung und die Erfindung selbst werden anhand der in den beiliegenden Zeichnungen dargestellten Ausführungsbeispiele erläutert. Es zeigen:
- Fig. 1: eine Seitenansicht eines erfindungsgemäßen Leitungsverbinders,
- Fig. 2: eine Aufsicht gemäß dem Pfeil II in Fig. 1,
- Fig. 3: einen Schnitt entlang der Schnittlinie III-III in Fig. 1,
- Fig. 4: einen Längsschnitt entlang der Schnittlinie IV-IV in Fig. 2,
- Fig. 5: eine Ansicht gemäß dem Pfeil V in Fig. 1,
- Fig. 6: eine perspektivische Ansicht einer erfindungsgemäßen Sensoreinheit,
- Fig. 7: eine perspektivische Ansicht einer weiteren Ausführungsform eines erfindungsgemäßen Leitungsverbinders mit befestigter Sensoreinheit,
- Fig. 8: einen Schnitt durch einen erfindungsgemäßen Leitungsverbinder mit angeschlossener Medienleitung und äußerem Gehäuse,
- Fig. 9: eine perspektivische Ansicht des Leitungsverbinders gemäß Fig. 8,
- Fig. 10: einen Längsschnitt durch eine weitere Ausführung eines erfindungsgemäßen Leitungsverbinders,
- Fig. 11: eine Darstellung des erfindungsgemäßen Messprinzips,
- Fig. 12: einen Längsschnitt durch eine weitere Ausführung eines erfindungsgemäßen Leitungsverbinders,
- Fig. 13: eine Ansicht gemäß dem Pfeil X in Fig. 12 und
- Fig. 14: einen Schnitt durch den Leitungsverbinder gemäß Fig. 13 entlang der Schnittlinie XIV-XIV.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit Merkmalen eines anderen Ausführungsbeispiels von Bedeutung für den Gegenstand der Erfindung.

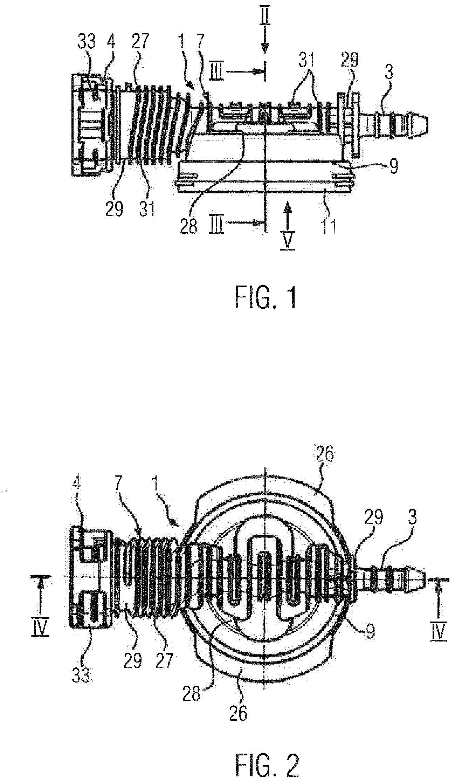

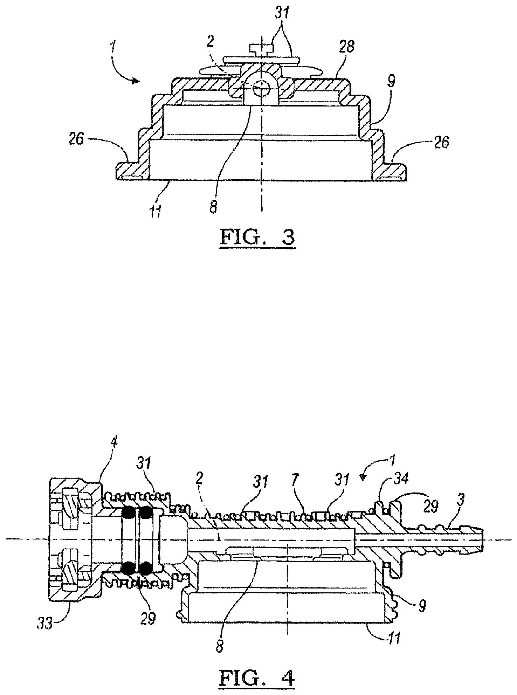

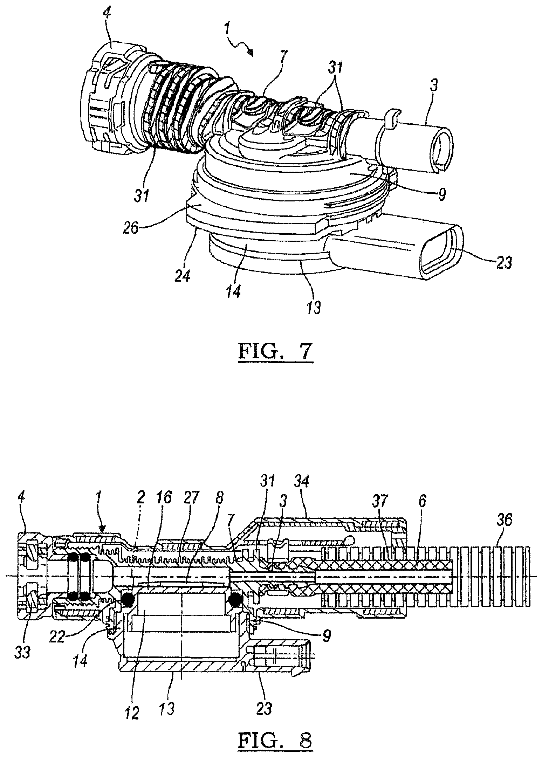

Wie sich zum Beispiel aus den Figuren 1 bis 6 ergibt, umfasst ein erfindungsgemäßer Leiterverbinder ein Verbinderstück 1 mit einem in seinem Innern in Längsrichtung des Verbinderstücks 1 verlaufenden Durchflusskanal 2 für ein Fluid, insbesondere eine Harnstofflösung, wobei das Verbinderstück 1 an seinen beiden Enden jeweils einen Anschlussabschnitt 3, 4 aufweist, der derart ausgebildet ist, dass eine flexible Medienleitung 6, siehe Fig. 8, oder ein Leitungsrohr oder ein Aggregat mit einem Aggregatanschluss anschließbar sind. Gemäß der Erfindung ist der Durchflusskanal 2 mit einer elektrischen Heizeinrichtung 7 versehen bzw. beheizbar, siehe Fig. 4.

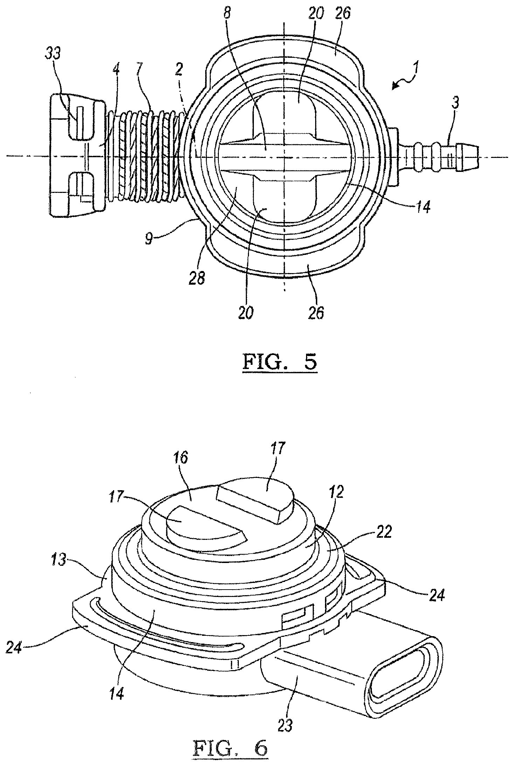

Im Bereich des Durchflusskanals 2 zwischen den beiden, an den Enden des Durchflusskanals 2 jeweils vorhandenen Anschlussabschnitten 3, 4 ist in einer den Durchflusskanal 2 umgebenden Wandung des Verbinderstücks 1 ein für ein optisches Sensorsignal durchlässiger Wandungsabschnitt 8 ausgebildet, der wie in Fig. 5 dargestellt ist, als Durchbruch hergestellt ist. Den für ein optisches Sensorsignal durchlässigen Wandungsabschnitt 8, den Durchbruch, umgibt umfangsgemäß ein Aufnahmegehäuse 9, das an dem Verbinderstück 1 ausgebildet ist. Dieses Aufnahmegehäuse 9 weist eine dem Wandungsabschnitt 8 gegenüberliegende Aufnahmeöffnung 11 auf, durch die eine optische Sensoreinheit 12 einsetzbar ist. Eine derartige optische Sensoreinheit 12 ist beispielhaft in Fig. 6 dargestellt. Eine derartige optische Sensoreinheit 12 dient zur Messung der Qualität der in dem Leitungsverbinder fließenden Harnstofflösung.

Vorzugsweise ist das Verbinderstück 1 einschließlich der beiden Anschlussabschnitte 3, 4 und dem Aufnahmegehäuse 9 als einstückiges integrales Spritzgusskunststoffteil ausgebildet. Hierbei wird ein Kunststoff verwendet, der zum Transport von Harnstofflösungen in der SCR-Technik geeignet ist. Die optische Sensoreinheit 12 ist zweckmäßigerweise in einem Verschlussdeckel 13 für die Aufnahmeöffnung 11 eingesetzt, wobei der Verschlussdeckel 13 zweckmäßigerweise in seiner die Aufnahmeöffnung 11 verschließenden Verschlussstellung mit dem Aufnahmegehäuse 9 lösbar oder unlösbar verbunden ist. Zweckmäßigerweise wird die lösbare Verschlussstellung des Verschlussdeckels 13 mittels einer bajonettartigen Verbindung hergestellt. Die unlösbare Verschlussstellung wird insbesondere durch eine material- bzw. stoffschlüssige Verbindung, insbesondere eine Laserschweißverbindung, gebildet. Der Verschlussdeckel 13 besitzt vorzugsweise einen durch eine Umfangswandung 14 umschlossenen Montageraum, in dem die optische Sensoreinheit 12 montierbar bzw. montiert ist. Die Höhe der Umfangswandung 14 ist zweckmäßigerweise derart dimensioniert, dass der Verschlussdeckel 13 in seiner Verschlussstellung mit der Umfangswandung 14 durch die Aufnahmeöffnung 11 hindurch in das Aufnahmegehäuse 9 hinein verläuft.

Der von der Umfangswandung 14 gebildete Montageraum des Verschlussdeckels 13 ist mit einer, für optische Signale der optischen Sensoreinheit 12 optisch durchlässigen Abdeckung 16 versehen. Hierbei ist die Abdeckung 16 derart ausgestaltet, dass von ihr der offene, als Durchbruch ausgebildete Wandungsabschnitt 8 in der Wandung 7 des Durchflusskanals 2 derart verschlossen wird, dass die Abdeckung 16 mit einem Wandabschnitt den Durchflusskanal 2 des Verbinderstücks 1 und den im Bereich des Durchflusskanals 2 vorhandenen Innenraum begrenzt.

Wie zum Beispiel in Fig. 5 dargestellt ist, ist der Durchflusskanal 2 zwischen den Vertiefungen 20 ausgebildet. Hierbei ist der Strömungsquerschnitt gegenüber dem des Durchflusskanals 2 im Anschluss 3 erweitert. Der Durchflusskanal 2 weist zum Beispiel einen halbkreisförmigen Querschnitt zwischen den Anschlussabschnitten 3, 4 auf und geht in die Vertiefungen 20 über. Im Anschlussabschnitt 4 ist eine Aufnahmeöffnung 4a ausgebildet, die insbesondere derart dimensioniert ist, dass ein Durchflusskanal eines in diese eingesteckten Steckerteils einen gleich großen Strömungsquerschnitt besitzt wie der Durchflusskanal des Anschlussabschnitts 3.

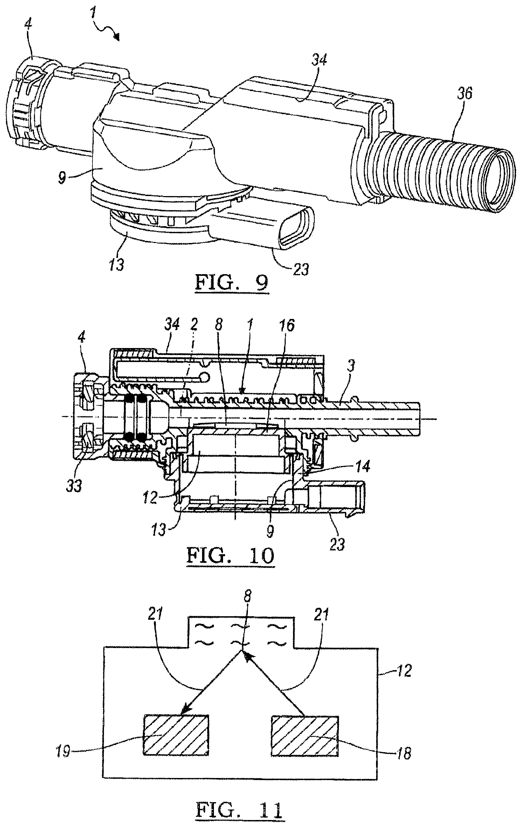

Weiterhin ist es von Vorteil, wenn die Abdeckung 16 des Verschlussdeckels 13 beidseitig ihres zur Begrenzung des Durchflusskanals 2 dienenden Wandabschnitts einander gegenüberliegend jeweils einen in seinem Innern einen Hohlraum aufweisenden Vorsprung 17 aufweist. Ein vorteilhafterweise verwendeter optischer Sensor, der innerhalb der Sensoreinheit 12 angeordnet ist, weist, wie in Fig. 11 schematisch dargestellt ist, einen Emitter 18 und einen optischen Empfänger (Receiver) 19 auf. Die beiden Vorsprünge 17 dienen zur mechanischen Fixierung der optischen Sensoreinheit 12. Der Emitter 18 und der Empfänger 19 sind derart angeordnet, dass ein optischer Strahlengang 21, wie in Fig. 11 dargestellt, über den Wandungsabschnitt 8 zu der im Durchflusskanal 2 und im übrigen Innenraum vorhandenen, insbesondere strömenden Harnstofflösung und von dort durch Reflexion zum Empfänger 19 geleitet wird, wenn die Sensoreinheit 12 vollständig in dem Aufnahmegehäuse 9 eingesetzt ist.

Weiterhin ist es von Vorteil, wenn in einem Bodenabschnitt 28 des Aufnahmegehäuses 9 beidseitig des durchlässigen Wandabschnitts 8, des Durchbruchs, jeweils eine Vertiefung 20 zur Aufnahme eines der Vorsprünge 17 der optischen Sensoreinheit 12 angeformt ist. Hierdurch wird sowohl eine sichere Abdeckung des zum Beispiel als Durchbruch ausgebildeten Wandungsabschnitts 8 und andererseits eine ungehinderte Einstrahlung des optischen Signals 21 auf das im Bereich des Durchflusskanals 2 vorhandene Fluid gewährleistet.

Wie insbesondere in Fig. 6 gezeigt ist, ist am freien Ende der Umfangswandung 14 zum Beispiel ein Absatz ausgebildet, auf dem eine Umfangsdichtung 22 gelagert ist, die vorzugsweise als elastisch verformbarer O-Dichtungsring ausgebildet ist.

Mit der Umfangsdichtung 22 wird eine fluiddichte Abdichtung zwischen dem Verschlussdeckel 13 und dem Aufnahmegehäuse 9 in der Verschlussstellung des Deckels 13 gewährleistet. An der optischen Sensoreinheit 12 ist ein Anschlussbereich 23 ausgebildet, der zum Anschluss von elektrischen Versorgungsleitern an den innerhalb der Sensoreinheit 12 angeordneten Sensor dient.

Vorteilhafterweise besitzt die Sensoreinheit 12 am Außenumfang ihrer Umfangswandung 14 senkrecht zu dieser ausgerichtete, stegförmige Fortsätze 24, die vorzugsweise bogenförmig verlaufen und einander diametral gegenüberliegen, siehe Fig. 6. Vorteilhafterweise besitzt das Aufnahmegehäuse 9 im eingesteckten Zustand der Sensoreinheit 12 den stegförmigen Fortsätzen 24 der Sensoreinheit 12 gegenüberliegende, bogenförmige stegförmige Fortsätze 26, siehe Fig. 5. Im Bereich dieser stegförmigen Fortsätze 24, 26 der Sensoreinheit 12 und des Aufnahmegehäuses 9 kann die Sensoreinheit 12 im montierten Zustand mit dem Aufnahmegehäuse 9, wie bereits ausgeführt, entweder stoffschlüssig oder formschlüssig verbunden werden.

Wie in den Figuren 1, 2 und 4 insbesondere dargestellt ist, ist an der Außenseite des Verbinderstücks 1 eine elektrische Heizeinrichtung 7 aus dort verlaufenden Heizelementen gebildet, die zur Aufheizung des in dem Verbinderstück 1 fließenden Fluids, d. h. der Harnstofflösung, dient. Im dargestellten Ausführungsbeispiel werden die Heizelemente aus einem elektrisch leitenden Leiterdraht 27 gebildet. Dieser Leiterdraht 27 verläuft im Bereich zwischen den Anschlussabschnitten 3, 4 auf der Außenseite des Verbinderstücks 1, insbesondere auf der Außenseite des Aufnahmegehäuses 9, und zwar auf der Außenseite des Bodenabschnitts 28 des Aufnahmegehäuses 9. Vorzugsweise verläuft der Leiterdraht 27 mäanderförmig parallel zum Bodenabschnitt 28, und im Bereich der zwischen dem Bodenabschnitt 28 und den Anschlussabschnitten 3, 4 liegenden zylinderförmigen Abschnitte 29 des Verbinderstücks 1 verläuft der Leiterdraht 27 umfangsgemäß um die zylinderförmigen Abschnitte 29 spiralförmig gewickelt herum. Die freien Enden des Leiterdrahtes 27 sind insbesondere derart geführt, dass sie mit von außen zugeführten elektrischen Versorgungsleitern elektrisch, zum Beispiel durch Klemmmittel, verbunden werden können. Es liegt ebenfalls im Rahmen der Erfindung, wenn der auf dem Verbinderstück 1 befindliche Leiterdraht 27 eine Fortsetzung eines elektrischen Heizleiters 37 ist, der auf einer mit dem Leitungsverbinder bzw. mit dem Verbinderstück 1 verbundenen Medienleitung 6 ist. Der auf dem Verbinderstück 1 befindliche Leitungsdraht 27 kann mit dem auf einer angeschlossenen Medienleitung 6 angeordneten elektrischen Heizleiter 37 in Reihe oder parallel geschaltet werden, und zwar über eine entsprechende elektrische Klemm- oder Lötverbindung.

Weiterhin kann es erfindungsgemäß von Vorteil sein, wenn der elektrische Leiterdraht 27, der auf dem Verbinderstück 1 angeordnet ist, mittels Führungselementen 31, die steg- oder rippenförmig ausgebildet sind oder aber auch als Führungsrillen ausgebildet sein können, in seinem Verlauf auf dem Verbinderstück 1 geführt und fixiert ist. Diese Führung und Fixierung des Leiterdrahtes 27 kann auch nur abschnittsweise vorgesehen sein.

In Fig. 1 ist dargestellt, dass einer der Anschlussabschnitte, und zwar im dargestellten Ausführungsbeispiel der Anschlussabschnitt 3, als Anschlussdorn geformt ist, auf den eine flexible Medienleitung 6 aufgesteckt wird, wie dies in Fig. 8 zu erkennen ist. In Fig. 7 ist eine alternative Ausführungsform dargestellt, hierbei ist der Anschlussabschnitt 3 als muffenartiges Aufnahmeelement ausgebildet, in das eine Medienleitung 6, insbesondere ein Leitungsrohr, eingesteckt werden kann, und eine stoffschlüssige Verbindung zwischen der eingesteckten Rohrleitung und dem muffenartigen Aufnahmeelement beispielsweise durch eine Laserschweißung erfolgt.

In Fig. 10 ist eine Ausführungsform dargestellt, bei der der Anschlussabschnitt 3 als SAE-Anschluss in Form eines rohrförmigen Anschlussstücks ausgebildet ist, auf das eine Medienleitung 6 aufgesteckt und zum Beispiel mit einer Klemmschelle befestigt wird.

Der Anschlussabschnitt 4 ist in den dargestellten Ausführungsbeispielen als Muffenabschnitt mit daran ausgebildeten Löseelementen 33 dargestellt, so dass ein Einsteckelement, beispielsweise ein Stecker, in dieses Muffenteil arretierend eingesetzt werden kann und hierbei über die Löseelemente 33 fixiert wird. Um dieses Einsteckelement herausziehen zu können, werden die Löseelemente 33 betätigt, beispielsweise gespreizt, und das Einsteckelement kann aus dem Muffenabschnitt herausgezogen werden.

Wie insbesondere aus Fig. 8 und 9 zu erkennen ist, kann es erfindungsgemäß von Vorteil sein, wenn das Verbinderstück 1 ausgehend von dem mit den Löseelementen 33 versehenen Anschlussabschnitt 4 bis über den Bereich des gegenüberliegenden Anschlussabschnitts 3, und zwar diesen Anschlussabschnitt in Längsrichtung übergreifend, von einer Kapselung 34, insbesondere aus Kunststoff, umschlossen ist. Durch eine derartige Kapselung wird einerseits verhindert, dass eine mechanische Beeinflussung des Verbinderstücks 1 und der darauf befindlichen Heizelemente 7 erfolgen kann, und andererseits wird eine Wärmeabstrahlung nach außen reduziert. Zudem kann dieses Gehäuse derart ausgestaltet sein, dass es eine Kammer zur Aufnahme von elektrischen Anschlussverbindern zwischen den Enden der auf dem Verbinderstück 1 befindlichen Heizelemente 7 und den Enden von außen eingeführten elektrischen Anschlussleiter sowie eventuell von Enden von Heizleitern einer angeschlossenen Medienleitung dient. In vorteilhafter Ausgestaltung kann eine derartige Kapselung 34 aus zwei Gehäuseschalen gebildet werden, so dass daraus ein Gehäuse entsteht, wobei die Gehäuseschalen mittels Rastmitteln miteinander, insbesondere auch lösbar, verbunden sind.

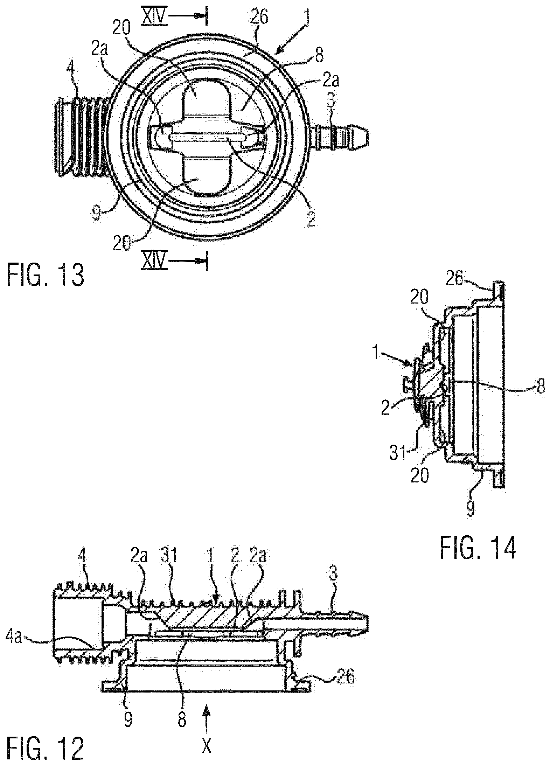

In Figur 12 ist eine alternative Ausführung des Durchflusskanals 2 dargestellt. Hierbei ist der Strömungsquerschnitt des Durchflusskanals 2 gegenüber dem Strömungsquerschnitt des Durchflusskanals im Anschlussabschnitt 3 reduziert. Dies gilt auch gegenüber dem Durchflusskanal eines in die Aufnahmeöffnung 4a des Anschlussabschnitts 4 eingesteckten Steckerteils. Hierdurch wird eine Geschwindigkeitserhöhung im Bereich des Durchflusskanals 2 des strömenden Mediums und insbesondere im Bereich der Messstelle erreicht, und zwar gegenüber der Strömungsgeschwindigkeit im Durchflusskanal des Anschlussabschnitts 3 und im Durchflusskanal des in die Aufnahmeöffnung 4a eingesteckten Steckerteils. Durch diese Ausgestaltung wird das Problem gelöst, dass Lufteinschlüsse, die sich in dem im Durchflusskanal strömenden Medium, z. B. einer Harnstofflösung, befinden, im Bereich der Messstelle sozusagen hängenbleiben oder sich ansammeln. Durch die erfindungsgemäße Reduzierung des Strömungsquerschnitts im Bereich des Durchflusskanals bzw. der Messstelle wird die Fließgeschwindigkeit des strömenden Mediums erhöht und diese sorgt dafür, dass sich vorhandene Luftblasen nicht mehr im Bereich der Messstelle ansammeln, sondern von dieser weggespült werden. Somit kann durch derartige Luftblasen nicht mehr die Messgenauigkeit beeinflusst werden.

Zweckmäßigerweise beträgt ein Gesamtquerschnitt des Strömungsabschnitts unterhalb der Sensormessstelle, der sich aus dem Strömungsquerschnitt des Durchflusskanals 2 und des an diesen angrenzenden, vom Medium ebenfalls durchflossenen Bereichs bildet, 60 % bis 75 % des Strömungsquerschnitts (Einlassquerschnitt) im Anschlussabschnitt 3. In Bezug auf den Strömungsquerschnitt des Durchflusskanals 2 ist es zweckmäßig, wenn dieser z. B. 1/3 des Strömungsquerschnitts im Anschlussabschnitt 3 beträgt. Beträgt der Durchmesser des Strömungskanals im Anschlussabschnitt 3 z. B. 6 mm, so beträgt der Durchmesser des Durchflusskanals 2 unterhalb der Sensormessstelle z. B. 2 mm.

Wie sich aus den Figuren erkennen lässt, wird zweckmäßigerweise die Verkleinerung des Strömungsquerschnitts des Durchflusskanals 2 durch eine Vergrößerung der Wandstärke der Wandung zwischen den Anschlussabschnitten 3, 4 erreicht. Zweckmäßigerweise erfolgt der Übergang zwischen dem Durchflusskanal im Anschlussabschnitt 3 und demjenigen im Anschlussabschnitt 4 kontinuierlich zum Beispiel über Schrägflächen 2a.

Die vorstehend beschriebene zweckmäßige Ausgestaltung des Durchflusskanals 2 basiert auf der grundsätzlichen erfindungsgemäßen Lehre, dass an Messstellen, an denen die Eigenschaften von strömenden Medien mittels Sensoren, insbesondere optischen Sensoren, gemessen werden, die Strömungsgeschwindigkeit zweckmäßigerweise derart zu erhöhen ist, und zwar gegenüber der Strömungsgeschwindigkeit des zu messenden Mediums vor und hinter der jeweiligen Messstelle, dass Ansammlungen von Luftblasen oder anderen die Messung beeinflussenden Partikeln im Bereich der Messstelle nicht entstehen können. Insbesondere ist zweckmäßig, wenn kein sprunghafter Übergang zwischen den unterschiedlichen Strömungsquerschnitten erfolgt, sondern ein kontinuierlicher Übergang zwischen den Strömungsquerschnitten, so dass hierdurch auch ein Vergleichmäßigung der Strömung bewirkt wird. Dabei ist es zweckmäßig, wenn beispielsweise eine venturidüsenartige Ausbildung realisiert wird.

Durch die Reduzierung des Strömungsquerschnitts im Bereich der Messstelle wird weiterhin bewirkt, dass durch die damit verbundene Reduzierung des Flüssigkeitsvolumens im Falle des Gefrierens der Strömungsflüssigkeit ein entstehender Eisdruck ebenfalls verringert wird, so dass die Gefahr der Beschädigung des Messsensors oder eine Zerstörung der Messvorrichtung wesentlich minimiert werden kann.

Weiterhin kann es erfindungsgemäß zweckmäßig sein, wenn durch eine entsprechende Gestaltung des Durchflusskanals vor und/oder hinter der Messstelle bewirkt wird, dass sich im Strömungsmedium enthaltene Gas- bzw. Luftblasen direkt neben und/oder über bzw. unter der Messstelle ansammeln. Derartige Gas- bzw. Luftblasen stören die Messung nicht, und im Falle des Gefrierens des Strömungsmediums kann in diesem Bereich Eisvolumen aufgenommen und dadurch der entstehende Eisdruck reduziert werden.

Weiterhin kann es zweckmäßig sein, den Einfluss der Messung an einer Messstelle mittels eines optischen Sensors zur Messung der Eigenschaften eines Mediums, insbesondere eines flüssigen Mediums, zum Beispiel einer SCR-Lösung, durch vorhandenes Umgebungslicht zu eliminieren. Hierzu wird im Bereich der Messstelle das die Messsensoren umgebende Material, insbesondere Kunststoff, zum Beispiel die vorhandene Gegenkontur zur Messvorrichtung oder vorhandene Abdeckungen, derart ausgebildet, dass es für die Wellenlänge des Umgebungslichtes, insbesondere für vorhandene UV- und/oder IR-Strahlung, undurchlässig ist. Damit ergibt sich ein Filter auf die Messwellenlänge des optischen Sensors, wobei das Material nur für diese Wellenlänge durchlässig ist. Bei der Verwendung von Laserlicht zur Messung wäre dann das den Messsensor umgebende Material für Laserstrahlung transparent.

Wie in Fig. 8 dargestellt ist, kann ein erfindungsgemäßer Leitungsverbinder Bestandteil einer konfektionierten Medienleitung sein, so dass das Verbinderstück 1 zum Beispiel im Bereich seines Anschlussabschnitts 3 mit einer hierauf befestigten Medienleitung 6 verbunden ist. Diese Medienleitung 6 kann von einer äußeren rohrförmigen Umhüllung 36, wobei es sich insbesondere um ein ringgewelltes Rohr handeln kann, umschlossen sein. Vorteilhafterweise wird dieses Rohr in das Gehäuse 34 einendig eingeführt und kann mit dem Gehäuse 34 formschlüssig verbunden sein.

In Fig. 10 ist eine so genannte "stand-alone" Variante eines Leitungsverbinders gemäß der Erfindung beispielhaft gezeigt. Hierbei erstreckt sich das Gehäuse 34 zwischen dem freiliegenden Anschlussabschnitt 4 und dem Übergang des Anschlussabschnitts 3 zum zylinderförmigen Abschnitt 29, so dass der Anschlussabschnitt 3 freiliegt, und zum Beispiel als SAE-Anschluss ausgebildet ist. Das Gehäuse 34 weist eine über die Länge des beheizten Bereiches verlaufende Kammer auf zur Aufnahme der elektrischen Anschlussleiter und der elektrischen Verbindungen zwischen den Anschlussleitern und dem elektrischen Leiter zum Beheizen des Verbindersteckers.

Es liegt im Rahmen der Erfindung, dass der erfindungsgemäße Leitungsverbinder beidseitig mit Anschlussabschnitten 3, wie vorstehend beschrieben, ausgebildet ist. Auch kann der erfindungsgemäße Leitungsverbinder als abgewinkelter Leitungsverbinder ausgebildet sein.

### Bezugszeichenliste

- 1: Verbinderstück
- 2: Durchflusskanal
- 3: Anschlussabschnitt
- 4: Anschlussabschnitt
- 4a: Aufnahmeöffnung
- 6: Medienleitung
- 7: Heizeinrichtung
- 8: Durchlässige Wandung
- 9: Aufnahmegehäuse
- 11: Aufnahmeöffnung
- 12: Sensoreinheit
- 13: Verschlussdeckel
- 14: Umfangswandung
- 16: Abdeckung
- 17: Vorsprünge
- 18: Emitter
- 19: Empfänger
- 20: Vertiefung
- 21: Strahlengang
- 22: Umfangsdichtung
- 23: Anschlussbereich
- 24: Fortsatz
- 26: Fortsätze
- 27: Leiterdraht
- 28: Bodenabschnitt
- 29: Zylinderförmige Abschnitte
- 31: Führungselemente
- 33: Löseelemente
- 34: Kapselung
- 36: Wellrohr
- 37: Heizleiter

## Patentansprüche

1. Leitungsverbinder, umfassend ein Verbinderstück (1) mit einem in seinem Innern in Längsrichtung des Verbinderstücks (1) verlaufenden Durchflusskanal (2) für ein Fluid, insbesondere eine Harnstofflösung, wobei das Verbinderstück (1) an seinen beiden Enden jeweils einen Anschlussabschnitt (3, 4) aufweist, der derart ausgebildet ist, dass eine flexible Medienleitung (6) oder ein Leitungsrohr oder ein Aggregat mit einem Aggregatanschluss anschließbar sind, und der Durchflusskanal (2) mit einer elektrischen Heizeinrichtung (7) versehen ist, wobei
im Bereich des Durchflusskanals (2) zwischen den an den beiden Enden vorhandenen Anschlussabschnitten (3, 4) in einer den Durchflusskanal (2) umgebenden Wandung des Verbinderstücks (1) ein für ein Signal durchlässiger Wandungsabschnitt (8) ausgebildet ist, und ein den durchlässigen Wandungsabschnitt (8) umfangsgemäß umfassendes Aufnahmegehäuse (9) an dem Verbinderstück (1) ausgebildet ist, das eine dem durchlässigen Wandungsabschnitt (8) gegenüberliegende Aufnahmeöffnung (11) zur Montage einer Sensoreinheit (12) innerhalb des Aufnahmegehäuses (9) aufweist,
**dadurch gekennzeichnet, dass** der Wandungsabschnitt für ein optisches Signal einer optischen Sensoreinheit (12) durchlässig ist, wobei der durchlässige Wandungsabschnitt als offener Durchbruch (8) ausgebildet ist und die Aufnahmeöffnung (11) mittels eines Verschlussdeckels (13) verschließbar ist, der in seiner die Aufnahmeöffnung (11) verschließenden Verschlussstellung mit dem Aufnahmegehäuse (9) lösbar oder unlösbar verbunden ist und der Verschlussdeckel (13) einen durch eine Umfangswandung (14) umschlossenen Montageraum aufweist, der in der Verschlussstellung durch die Aufnahmeöffnung (11) des Aufnahmegehäuses (9) hindurch verläuft, wobei in dem Montageraum die optische Sensoreinheit (12) montierbar bzw. montiert ist und der Montageraum des Verschlussdeckels (13) mit einer für optische Signale des optischen Sensors durchlässigen Abdeckung (16) an seiner dem Durchbruch (8) zugekehrten Seite verschlossen ist, und die Sensoreinheit (12) durch die Abdeckung (16) in dem Montageraum eingeschlossen ist, wobei die Abdeckung (16) derart ausgebildet ist, dass die Abdeckung (16) den Durchbruch (8) in der Wandung des Durchflusskanals (2) derart verschließt, dass die Abdeckung (16) mit einem Wandabschnitt den Durchflusskanal (2) des Verbinderstücks (1) begrenzt.

2. Leitungsverbinder nach Anspruch 1,
**dadurch gekennzeichnet, dass** das Verbinderstück (1) als einstückiges, integrales Spritzgusskunststoffteil einschließlich des Aufnahmegehäuses (9) ausgebildet ist.

3. Leitungsverbinder nach Anspruch 1 oder 2,
**dadurch gekennzeichnet, dass** das Verbinderstück (1) aus einem Kunststoff hergestellt ist, der zum Transport von Harnstofflösungen zur Verwendung bei SCR-Katalysatoren geeignet ist.

4. Leitungsverbinder nach Anspruch 1,
**dadurch gekennzeichnet, dass** die lösbare Verbindung des Verschlussdeckels (13) durch eine Bajonett-Verbindung gebildet wird.

5. Leitungsverbinder nach Anspruch 1,
**dadurch gekennzeichnet, dass** die unlösbare Verbindung des Verschlussdeckels (13) durch eine stoffschlüssige Verbindung, insbesondere eine Laserschweißverbindung, gebildet ist.

6. Leitungsverbinder nach einem der Ansprüche 1 bis 5,
**dadurch gekennzeichnet, dass** zwischen dem Verschlussdeckel (13) in seiner Verschlussstellung und dem Aufnahmegehäuse (9) eine Umfangsdichtung (22) zum Abdichten gegen einen Fluidaustritt aus dem Aufnahmegehäuse (9) angeordnet ist.

7. Leitungsverbinder nach Anspruch 1, **dadurch gekennzeichnet, dass** die Abdeckung (16) beidseitig ihres Wandabschnittes zur Begrenzung des Durchflusskanals (2) einander gegenüberliegend jeweils einen, einen inneren Hohlraum aufweisenden Vorsprung (17) zur mechanischen Fixierung der optischen Sensoreinheit (12) aufweist, wobei der Emitter (18) und der Empfänger (19) derart angeordnet sind, dass ein optischer Strahlengang (21) vom Emitter (18) über den Durchbruch (8) zu dem im Bereich des Durchflusskanals (2) vorhandenen Medium und von dort durch Reflexion zum Empfänger (19) geleitet wird.

8. Leitungsverbinder nach Anspruch 7,
**dadurch gekennzeichnet, dass** in einem Bodenabschnitt (28) des Aufnahmegehäuses (9) beidseitig des Durchbruchs (8) jeweils eine Vertiefung (20) zur Aufnahme eines der Vorsprünge (17) zur Aufnahme des Emitters (18) bzw. des Empfängers (19) ausgeformt ist.

9. Leitungsverbinder nach einem der Ansprüche 1 bis 8,
**dadurch gekennzeichnet, dass** der Strömungsquerschnitt des Durchflusskanals (2) im Verbinderstück (1) größer ist als der Strömungsquerschnitt der in den Anschlussabschnitten (3, 4) wirksamen Durchflusskanäle.

10. Leitungsverbinder nach einem der Ansprüche 1 bis 9,
**dadurch gekennzeichnet, dass** der Strömungsquerschnitt des Durchflusskanals (2) im Verbinderstück (1) zumindest im Bereich der Messstelle der Sensoreinheit (12) kleiner ist als der wirksame Strömungsquerschnitt der in den Anschlussabschnitten (3, 4) vorhandenen Durchflusskanäle.

11. Leitungsverbinder nach Anspruch 9 oder 10,
**dadurch gekennzeichnet, dass** ein kontinuierlicher Übergang zwischen den unterschiedlichen Strömungsquerschnitten ausgebildet ist.

12. Leitungsverbinder nach einem der Ansprüche 1 bis 11,
**dadurch gekennzeichnet, dass** an der Sensoreinheit (12) im Bereich des Verschlussdeckels (13) ein Anschlussbereich (23) für elektrische Versorgungsleiter ausgebildet ist.

13. Leitungsverbinder nach einem der Ansprüche 1 bis 12,
**dadurch gekennzeichnet, dass** die elektrische Heizeinrichtung (7) aus an dem Verbinderstück (1) an seiner Außenseite verlaufenden Heizelementen (27) gebildet ist.

14. Leitungsverbinder nach Anspruch 13,
**dadurch gekennzeichnet, dass** das Heizelement aus mindestens einem elektrischen Leiterdraht (27) gebildet ist, der im Bereich des Verbinderstücks (1) zwischen den Anschlussabschnitten (3, 4) auf der Außenseite eines Bodenabschnitts (28) des Aufnahmegehäuses (9), an der Außenseite der Wandung des Durchflusskanals (2) mäanderförmig und im Bereich von zylinderförmigen Abschnitten (29) des Verbinderstücks (1) zwischen dem Bodenabschnitt (28) und den Anschlussabschnitten (3, 4) umfangsgemäß spiralförmig verläuft, und die beiden Enden des Leiterdrahtes (27) zum Anschluss an separate elektrische Versorgungsleiter ausgebildet und angeordnet sind.

15. Leitungsverbinder nach Anspruch 14,
**dadurch gekennzeichnet, dass** der elektrische Leiterdraht (27) mit Führungselementen (31) in seinem jeweiligen Verlauf auf dem Verbinderstück (1) abschnittsweise oder über seinen gesamten Verlauf geführt ist.

16. Leitungsverbinder nach Anspruch 14 oder 15,
**dadurch gekennzeichnet, dass** die Anschlussabschnitte (3, 4) jeweils als Muffenabschnitt mit daran angeordneten Löseelementen (33) zum wiederlösbaren Einstecken von Einsteckelementen und/oder als Anschlusselement zum Aufstecken einer anzuschließenden Medienleitung (6) und/oder als muffenartiges Aufnahmeelement zur Einsteckaufnahme einer anzuschließenden Medienleitung (6) und zur stoffschlüssigen Verbindung mit dieser ausgebildet sind.

17. Leitungsverbinder nach Anspruch 16, **dadurch gekennzeichnet, dass** das Verbinderstück (1) im Bereich zwischen dem mit Löseelementen (33) versehenen Anschlussabschnitt (4) bis über den Bereich oder bis zum Bereich des gegenüberliegenden Anschlussabschnitts (3) von einer Kapselung (34) umschlossen ist.

18. Leitungsverbinder nach Anspruch 17,
**dadurch gekennzeichnet, dass** die Kapselung (34) aus zwei Gehäuseschalen zu einem Gehäuse zusammengesetzt ist, die durch Rastmittel miteinander lösbar verbunden sind.

19. Leitungsverbinder nach Anspruch 17 oder 18,
**dadurch gekennzeichnet, dass** die Kapselung oder das Gehäuse eine Aufnahmekammer zur Aufnahme von elektrischen Verbindungselementen zum Verbinden der Enden des Leiterdrahtes (27) mit elektrischen Anschlussdrähten einer externen Spannungsquelle und/oder von Enden eines Heizleiters (37) einer anzuschließenden Medienleitung (6) aufweist.

20. Konfektionierte Medienleitung, umfassend eine rohrartige oder schlauchförmige Medienleitung (6) und einen ein- oder beidseitig an diese Medienleitung (6) angeschlossenen Leitungsverbinder, **gekennzeichnet durch** einen Leitungsverbinder nach einem oder mehreren der Ansprüche 1 bis 19.

21. Konfektionierte Medienleitung nach Anspruch 20,
**dadurch gekennzeichnet, dass** die rohr- oder schlauchförmige Medienleitung (6) von einem Mantelrohr, insbesondere Wellrohr (36) umschlossen ist, und die Medienleitung (6) entlang ihrer Längsrichtung spiralförmig von einem Heizleiter (37) umwickelt ist, wobei das Mantelrohr (36) in der Kapselung bzw. dem Gehäuse (34) mit seinem jeweiligen Ende, das in die Kapselung bzw. das Gehäuse (34) eingeführt ist, mit der Kapselung bzw. dem Gehäuse (34) formschlüssig verbunden ist, sowie der Heizdraht (37) der Medienleitung (6) mit einer externen Spannungsquelle über Anschlussleiter und/oder mittels einer Reihen- oder Parallelschaltung mit dem Leiterdraht (27) des Verbinderstücks (1) elektrisch verbunden ist.

## Claims

1. Line connector, comprising a connector piece (1) with a flow channel (2), running inside it in the longitudinal direction of the connector piece (1), for a fluid, in particular a urea solution, wherein the connector piece (1) has at each of both its ends a connecting portion (3, 4), which is formed in such a way that a flexible media line (6) or a line pipe or a unit with a unit connection can be connected, and the flow channel (2) is provided with an electrical heating device (7), wherein, in a wall of the connector piece (1) surrounding the flow channel (2), a wall portion (8) that is permeable to a signal is formed in the region of the flow channel (2) between the connecting portions (3, 4) present at the two ends, and a receiving housing (9) that circumferentially surrounds the permeable wall portion (8) is formed on the connector piece (1) and has a receiving opening (11), opposite the permeable wall portion (8), for fitting a sensor unit (12) within the receiving housing (9),
**characterized in that** the wall portion is permeable to an optical signal of an optical sensor unit (12), wherein the permeable wall portion is formed as an open aperture (8) and the receiving opening (11) can be closed by means of a closure cover (13), which, in its closure position closing the receiving opening (11), is releasably or unreleasably connected to the receiving housing (9) and the closure cover (13) has a fitting space which is enclosed by a circumferential wall (14) and in the closure position passes through the receiving opening (11) of the receiving housing (9), wherein the optical sensor unit (12) can be fitted or is fitted in the fitting space and the fitting space of the closure cover (13) is closed on its side facing the aperture (8) by a covering (16) that is permeable to optical signals of the optical sensor, and the sensor unit (12) is enclosed in the fitting space by the covering (16), wherein the covering (16) is formed in such a way that the covering (16) closes the aperture (8) in the wall of the flow channel (2) in such a way that the covering (16) bounds with a wall portion the flow channel (2) of the connector piece (1).

2. Line connector according to Claim 1,
**characterized in that** the connector piece (1) is formed as a one-piece, integral injection-moulded plastic part, including the receiving housing (9).

3. Line connector according to Claim 1 or 2,
**characterized in that** the connector piece (1) is produced from a plastic that is suitable for the transport of urea solutions for use in SCR catalysts.

4. Line connector according to Claim 1,
**characterized in that** the releasable connection of the closure cover (13) is formed by a bayonet connection.

5. Line connector according to Claim 1,
**characterized in that** the unreleasable connection of the closure cover (13) is formed by a material-bonded connection, in particular a laser-welded connection.

6. Line connector according to one of Claims 1 to 5, **characterized in that** arranged between the closure cover (13) in its closed position and the receiving housing (9) is a circumferential seal (22) for sealing to prevent fluid escaping from the receiving housing (9).

7. Line connector according to Claim 1,
**characterized in that** the covering (16) has on both sides of its wall portion for bounding the flow channel (2) in each case a projection (17) for mechanically fixing the optical sensor unit (12), which projections lie opposite one another and have an inner cavity, wherein the emitter (18) and the receiver (19) are arranged in such a way that an optical beam (21) is directed from the emitter (18) via the aperture (8) to the medium present in the region of the flow channel (2) and from there by reflection to the receiver (19).

8. Line connector according to Claim 7,
**characterized in that**, in a bottom portion (28) of the receiving housing (9), a depression (20) for receiving one of the projections (17) for receiving the emitter (18) or the receiver (19) is respectively formed on both sides of the aperture (8).

9. Line connector according to one of Claims 1 to 8, **characterized in that** the flow cross section of the flow channel (2) in the connector piece (1) is greater than the flow cross section of the effective flow channels in the connecting portions (3, 4).

10. Line connector according to one of Claims 1 to 9, **characterized in that**, at least in the region of the measuring point of the sensor unit (12), the flow cross section of the flow channel (2) in the connector piece (1) is smaller than the effective flow cross section of the flow channels present in the connecting portions (3, 4).

11. Line connector according to Claim 9 or 10, **characterized in that** a continuous transition is formed between the various flow cross sections.

12. Line connector according to one of Claims 1 to 11, **characterized in that** a connecting region (23) for electrical supply conductors is formed on the sensor unit (12) in the region of the closure cover (13).

13. Line connector according to one of Claims 1 to 12, **characterized in that** the electrical heating device (7) is formed by heating elements (27) running on the outside of the connector piece (1).

14. Line connector according to Claim 13,
**characterized in that** the heating element is formed by at least one electrical conductor wire (27), which runs in a meandering form in the region of the connector piece (1) between the connecting portions (3, 4) on the outside of a bottom portion (28) of the receiving housing (9), on the outside of the wall of the flow channel (2), and runs in a circumferential spiralling form in the region of cylindrical portions (29) of the connector piece (1) between the bottom portion (28) and the connecting portions (3, 4), and the two ends of the conductor wire (27) are formed and arranged for connection to separate electrical supply conductors.

15. Line connector according to Claim 14,
**characterized in that** the electrical conductor wire (27) is guided by guiding elements (31) in its respective course on the connector piece (1), over some portions or over its entire course.

16. Line connector according to Claim 14 or 15, **characterized in that** the connecting portions (3, 4) are respectively formed as a socket portion, with releasing elements (33) arranged on it, for the re-releasable insertion of inserting elements and/or as a connecting element for the attachment of a media line (6) to be connected and/or as a socket-like receiving element for the reception of an inserted media line (6) to be connected and for the material-bonded connection to the latter.

17. Line connector according to Claim 16,
**characterized in that** the connector piece (1) is enclosed by an encapsulation (34) in the region between the connecting portion (4) provided with releasing elements (33) to beyond the region or up to the region of the opposite connecting portion (3).

18. Line connector according to Claim 17,
**characterized in that** the encapsulation (34) is put together to form a housing from two housing shells, which are releasably connected to one another by latching means.

19. Line connector according to Claim 17 or 18,
**characterized in that** the encapsulation or the housing has a receiving chamber for receiving electrical connecting elements for connecting the ends of the conductor wire (27) to electrical terminal wires of an external voltage source and/or ends of a heating conductor (37) of a media line (6) to be connected.

20. Ready-made media line, comprising a pipe-like or tubular media line (6) and a line connector connected to this media line (6) on one or both sides, **characterized by** a line connector according to one or more of Claims 1 to 19.

21. Ready-made media line according to Claim 20,
**characterized in that** the pipe-like or tubular media line (6) is enclosed by a jacket pipe, in particular a corrugated pipe (36), and the media line (6) is wound around spirally along its longitudinal direction by a heating conductor (37), wherein, in the encapsulation or the housing (34), the jacket pipe (36) is connected by its respective end, which is inserted in the encapsulation or the housing (34), in a form-fitting manner to the encapsulation or the housing (34), and also the heating wire (37) of the media line (6) is electrically connected to an external voltage source by way of terminal conductors and/or by means of a series or parallel connection to the conductor wire (27) of the connector piece (1) .

## Revendications

1. Raccord de conduite, comprenant une pièce de raccord (1) dotée d'un conduit d'écoulement (2) s'étendant à l'intérieur de celle-ci dans la direction longitudinale de la pièce de raccord (1), pour un fluide, en particulier une solution d'urée, dans lequel la pièce de raccord (1) présente au niveau de ses deux extrémités respectivement une partie de connexion (3, 4) qui est réalisée de telle sorte qu'une conduite à fluide flexible (6) ou un tuyau conducteur ou un agrégat muni d'une connexion d'agrégat peut être connecté (e), et le conduit d'écoulement (2) est équipé d'un dispositif de chauffage électrique (7), dans lequel, au niveau du conduit d'écoulement (2), entre les parties de connexion (3, 4) présentes aux deux extrémités, dans une paroi entourant le conduit d'écoulement (2) de la pièce de raccord (1), une partie de paroi (8) laissant passer un signal est réalisée, et un boîtier de réception (9) entourant la partie de paroi passante (8) en circonférence est réalisé sur la pièce de raccord (1) et présente un orifice de réception (11) opposé à la partie de paroi passante (8) pour l'installation d'une unité de détection (12) à l'intérieur du boîtier de réception (9),
**caractérisé en ce que** la partie de paroi laisse passer un signal optique d'une unité de détection optique (12), dans lequel la partie de paroi passante est réalisée sous forme d'ajour ouvert (8) et l'orifice de réception (11) peut être fermé au moyen d'un couvercle de fermeture (13) qui, dans sa position de fermeture fermant l'orifice de réception (11), est relié au boîtier de réception (9) de manière amovible ou inamovible, et le couvercle de fermeture (13) présente un espace d'installation entouré d'une paroi circonférentielle (14) et s'étendant à travers l'orifice de réception (11) du boîtier de réception (9) dans la position de fermeture, dans lequel l'unité de détection optique (12) est ou peut être installée dans l'espace d'installation, et l'espace d'installation du couvercle de fermeture (13) est fermé par un recouvrement (16) laissant passer des signaux optiques du capteur optique sur sa face tournée vers l'ajour (8), et l'unité de détection (12) est enfermée par le recouvrement (16) dans l'espace d'installation, dans lequel le recouvrement (16) est réalisé de telle sorte que le recouvrement (16) ferme l'ajour (8) dans la paroi du conduit d'écoulement (2) de telle sorte que le recouvrement (16) limite par une partie de paroi le conduit d'écoulement (2) de la pièce de raccord (1).

2. Raccord de conduite selon la revendication 1, **caractérisé en ce que** la pièce de raccord (1) est réalisée sous la forme d'une pièce plastique intégrale, moulée par injection comprenant le boîtier de réception (9) .

3. Raccord de conduite selon la revendication 1 ou 2, **caractérisé en ce que** la pièce de raccord (1) est fabriquée à partir d'une matière plastique qui convient au transport de solutions d'urée destinées à une utilisation par des catalyseurs SCR.

4. Raccord de conduite selon la revendication 1, **caractérisé en ce que** la connexion amovible du couvercle de fermeture (13) est formée par une connexion à baïonnette.

5. Raccord de conduite selon la revendication 1, **caractérisé en ce que** la connexion inamovible du couvercle de fermeture (13) est formée par une connexion par liaison de matière, en particulier un assemblage soudé au laser.

6. Raccord de conduite selon l'une quelconque des revendications 1 à 5, **caractérisé en ce qu'**entre le couvercle de fermeture (13) dans sa position de fermeture et le boîtier de réception (9) un joint périphérique (22) est disposé pour l'étanchéité par rapport à une fuite de fluide du boîtier de réception (9) .

7. Raccord de conduite selon la revendication 1, **caractérisé en ce que** le recouvrement (16) présente des deux côtés de sa partie de paroi, en vue d'une limitation du conduit d'écoulement (2), en opposition respectivement une saillie (17) présentant une cavité intérieure pour une fixation mécanique de l'unité de détection optique (12), dans lequel l'émetteur (18) et le récepteur (19) sont disposés de telle sorte qu'un trajet optique (21) est guidé depuis l'émetteur (18) en passant par l'ajour (8) jusqu'au fluide présent au niveau du conduit d'écoulement (2) et de là par réflexion jusqu'au récepteur (19).

8. Raccord de conduite selon la revendication 7, **caractérisé en ce que** dans une partie de fond (28) du boîtier de réception (9), des deux côtés de l'ajour (8), respectivement un creux (20) est pratiqué pour recevoir l'une des saillies (17) pour recevoir l'émetteur (18) ou le récepteur (19).

9. Raccord de conduite selon l'une quelconque des revendications 1 à 8, **caractérisé en ce que** la section transversale d'écoulement du conduit d'écoulement (2) dans la pièce de raccord (1) est supérieure à la section transversale d'écoulement des conduits d'écoulement effectifs dans les parties de connexion (3, 4).

10. Raccord de conduite selon l'une quelconque des revendications 1 à 9, **caractérisé en ce que** la section transversale d'écoulement du conduit d'écoulement (2) dans la pièce de raccord (1), au moins au niveau du point de mesure de l'unité de détection (12), est inférieure à la section transversale d'écoulement effective des conduits d'écoulement présents dans les parties de connexion (3, 4).

11. Raccord de conduite selon la revendication 9 ou 10, **caractérisé en ce qu'**une transition continue est réalisée entre les différentes sections transversales d'écoulement.

12. Raccord de conduite selon l'une quelconque des revendications 1 à 11, **caractérisé en ce que** sur l'unité de détection (12), au niveau du couvercle de fermeture (13), une zone de connexion (23) est réalisée pour des conducteurs d'alimentation électrique.

13. Raccord de conduite selon l'une quelconque des revendications 1 à 12, **caractérisé en ce que** le dispositif de chauffage électrique (7) est formé par des éléments de chauffe (27) s'étendant sur la pièce de raccord (1) sur la face extérieure de celle-ci.

14. Raccord de conduite selon la revendication 13, **caractérisé en ce que** l'élément de chauffe est formé par au moins un fil conducteur électrique (27) qui s'étend au niveau de la pièce de raccord (1) entre les parties de connexion (3, 4) sur la face extérieure d'une partie de fond (28) du boîtier de réception (9), en méandre sur la face extérieure de la paroi du conduit d'écoulement (2), et au niveau de parties cylindriques (29) de la pièce de raccord (1) entre la partie de fond (28) et les parties de connexion (3, 4) de manière circonférentielle en forme de spirale, et les deux extrémités du fil conducteur (27) sont réalisées et disposées pour la connexion à des conducteurs d'alimentation électrique séparés.

15. Raccord de conduite selon la revendication 14, **caractérisé en ce que** le fil conducteur électrique (27) est guidé par des éléments de guidage (31) sur son trajet respectif sur la pièce de raccord (1) par endroits ou sur l'ensemble de son trajet.

16. Raccord de conduite selon la revendication 14 ou 15, **caractérisé en ce que** les parties de connexion (3, 4) sont réalisées respectivement sous la forme d'une partie de manchon dotée d'éléments de déblocage (33) disposés sur celui-ci pour une insertion amovible d'éléments d'insertion et/ou sous la forme d'un élément de connexion pour emmancher une conduite à fluide (6) à connecter et/ou sous la forme d'un élément de réception de type manchon pour recevoir par insertion une conduite à fluide à connecter (6) et pour une connexion par liaison de matière à celle-ci.

17. Raccord de conduite selon la revendication 16, **caractérisé en ce que** la pièce de raccord (1) est entourée d'un blindage (34) dans la zone entre la partie de connexion (4) munie d'éléments de déblocage (33) jusqu'au-delà de la zone ou jusqu'à la zone de la partie de connexion opposée (3).

18. Raccord de conduite selon la revendication 17, **caractérisé en ce que** le blindage (34) est assemblé en un boîtier à partir de deux coques de boîtier qui sont reliées l'une à l'autre de manière amovible par des moyens d'enclenchement.

19. Raccord de conduite selon la revendication 17 ou 18, **caractérisé en ce que** le blindage ou le boîtier présente une chambre de réception pour recevoir des éléments de connexion électriques pour connecter les extrémités du fil conducteur (27) à des fils de connexion électriques d'une source de tension externe et/ou des extrémités d'un conducteur chauffant (37) d'un conduit à fluide (6) à connecter.

20. Conduit à fluide surmoulé, comprenant un conduit à fluide de type tube ou en forme de tuyau flexible (6) et un raccord de conduite connecté à ce conduit de fluide (6) sur un ou deux côtés, **caractérisé par** un raccord de conduite selon une ou plusieurs des revendications 1 à 19.

21. Conduit de fluide surmoulé selon la revendication 20, **caractérisé en ce que** le conduit à fluide (6) en forme de tube ou de tuyau flexible est entouré d'une gaine, en particulier d'un tube ondulé (36), et sur le conduit de fluide (6) un conducteur chauffant (37) est enroulé en forme de spirale le long de la direction longitudinale de celui-ci, dans lequel la gaine (36) dans le blindage ou le boîtier (34) est reliée par son extrémité respective, qui est introduite dans le blindage ou le boîtier (34), au blindage ou au boîtier (34) par complémentarité de forme, et le fil chauffant (37) du conduit de fluide (6) est relié électriquement à une source de tension externe par un conducteur de connexion et/ou au moyen d'une connexion série ou parallèle au fil conducteur (27) de la pièce de raccord (1).
